# EUROPEAN PATENT APPLICATION

(11) **EP 3 726 808 A1**
(43) Date of publication of application: **21.10.2020**
(21) Application number: 18889032.1
(22) Date of filing: 12.12.2018
(51) Int. Cl.: H04L 29/08

(54) **DISPLAY CONTROL METHOD AND DEVICE FOR VEHICLE-MOUNTED SCREEN, AUTOMOBILE AND COMPUTER STORAGE MEDIUM**

(30) Priority: 15.12.2017 CN 201711345953; 28.02.2018 CN 201810166826
(71) Applicant: Nio Nextev Limited, Hong Kong (CN)
(72) Inventor: LIU, Yang, Hong Kong (CN); DONG, Yiwei, Hong Kong (CN)
(74) Representative: Barker Brettell LLP
(86) International application number: PCT/CN2018/120423
(87) International publication number: WO 2019/114711

(57) **Abstract**

A display control method and device for an onboard screen, an automobile and a computer storage medium are disclosed, the method comprising: receiving driving data of a user from an electronic control component (ECU) of a vehicle (110); classifying the driving data so as to determine a plurality of pieces of relational data reflecting an interactive relationship between the user and the vehicle (130); judging whether first relational data in the plurality of pieces of relational data meets a preset first condition (150); and displaying, on the onboard screen, a first visualized pattern corresponding to the first relational data to the user if the first relational data meets the preset first condition (170).

## Description

### Technical Field

The invention relates to the technical field of automobiles, and in particular to a display control method and device for an onboard screen, an automobile and a computer storage medium.

### Background Art

Generally, there are two types of onboard displays: one type is televisions placed in passenger vehicles for watching, which are substantively onboard televisions; and the other type is onboard displays (in a size of 3.5 inches, 4.3 inches, 7 inches, 9 inches or larger). The onboard displays generally have two channels of video inputs, one of which can be connected to an onboard DVD, and the other is connected to an onboard camera that provides a rear view of a vehicle. Some onboard displays further have MP5 video playing and Bluetooth functions, so as to facilitate audio and video entertainment.

Chinese patent CN 105644444A discloses an onboard display system, which is used to solve the problem of low definition of a displayed image in the prior art, and thus to realize a driver's better control of a situation outside the vehicle he/she drives and the driving safety. The onboard display system comprises a camera module and a display screen; the camera module is installed at a preset position outside the vehicle, and configured to capture road condition images during driving and send the road condition images to the display screen; and the display screen is arranged in the vehicle, adheres to a front windshield of the vehicle or is suspended in front of the front windshield of the vehicle, and is configured to display the received road condition images.

Functions of the existing onboard display apparatuses or system described above are limited to the following aspects: displaying operation control of a vehicle, displaying a map, displaying a rear view of a vehicle, displaying audio and video entertainment, etc., which lacks immediate feedback on an interactive relationship between the vehicle and a user, making it difficult to realize the user's immersive experience.

The foregoing information disclosed in the background of the invention is only intended to facilitate understanding of the overall background of the invention, and should not be considered as an acknowledgement or any form of suggestion that the information constitutes the prior art already known to those of ordinary skill in the art.

### Summary of the Invention

In order to solve at least one of the plurality of above problems in the prior art, the invention provides a display control method for an onboard screen, the method comprising: receiving driving data of a user; classifying the driving data so as to determine a plurality of pieces of relational data reflecting an interactive relationship between the user and the vehicle; judging whether first relational data in the plurality of pieces of relational data meets a preset first condition; and displaying, on the onboard screen, a first visualized pattern corresponding to the first relational data to the user if the first relational data meets the preset first condition.

The above display control method may further comprise: judging whether second relational data in the plurality of pieces of relational data meets a preset second condition; and displaying, on the onboard screen, a second visualized pattern corresponding to the second relational data to the user if the second relational data meets the preset second condition.

In the above display control method, the first visualized pattern and the second visualized pattern are simultaneously displayed on the onboard screen to the user in the form of a time table.

In the above display control method, the plurality of pieces of relational data comprise any one of the following: a pickup date, a maintenance date, a long-distance trip date, an application use date, a traveling mileage, the number of cities arrived during a long-distance trip, a vehicle owner activity date and a system update date.

The above display control method may further comprise: receiving the relational data from a cloud server; and performing display on the onboard screen to the user according to the relational data.

The above display control method may further comprise: determining the number N of visualized patterns to be displayed to the user; and selecting some of the N visualized patterns for display if N is greater than a predetermined threshold.

The above display control method may further comprise: determining a proximity between a plurality of dates corresponding to a plurality of visualized patterns to be displayed to the user; and displaying at least some of the plurality of visualized patterns according to the proximity.

In the above display control method, the visualized pattern is a graph or text. In the above display control method, the driving data is received from an electronic control component (ECU) of the vehicle or acquired from a cloud server.

According to another aspect of the invention, a display control device for an onboard screen is provided, the device comprising: a first receiving unit configured to receive driving data of a user; a classification unit configured to classify the driving data so as to determine a plurality of pieces of relational data reflecting an interactive relationship between the user and the vehicle; a first judgment unit configured to judge whether first relational data in the plurality of pieces of relational data meets a preset first condition; and a first display unit configured to display, on the onboard screen, a first visualized pattern corresponding to the first relational data to the user if the first relational data meets the first condition.

The above display control device may further comprise: a second judgment unit configured to judge whether second relational data in the plurality of pieces of relational data meets a preset second condition; and a second display unit configured to display, on the onboard screen, a second visualized pattern corresponding to the second relational data to the user if the second relational data meets the second condition.

In the display control device, the first display unit and the second display unit are configured to simultaneously display, on the onboard screen, the first visualized pattern and the second visualized pattern to the user in the form of a time table.

In the above display control device, the plurality of pieces of relational data comprise any one of the following: a pickup date, a maintenance date, a long-distance trip date, an application use date, a traveling mileage, the number of cities arrived during a long-distance trip, a vehicle owner activity date and a system update date.

The above display control device may further comprise: a second receiving unit configured to receive the relational data from a cloud server; and a third display unit configured to perform display on the onboard screen to the user according to the relational data.

The above display control device may further comprise: a first determination unit configured to determine the number N of visualized patterns to be displayed to the user; and a fourth display unit configured to select some of the N visualized patterns for display if N is greater than a predetermined threshold.

The above display control device may further comprise: a second determination unit configured to determine a proximity between a plurality of dates corresponding to a plurality of visualized patterns to be displayed to the user; and a fifth display unit configured to display at least some of the plurality of visualized patterns according to the proximity.

In the above display control device, the visualized pattern is text or a graph. In the above display control device, the first receiving unit is configured to receive the driving data of the user from an electronic control component (ECU) of the vehicle or acquire the driving data from a cloud server.

According to a further aspect of the invention, an automobile is provided, which comprises the display control device described above.

According to a further aspect of the invention, a computer storage medium is provided, which comprises an instruction, wherein when the instruction is executed, the display control method described above is carried out.

In the technical solutions of the invention, driving data of a user is received and converted into a plurality of pieces of relational data reflecting an interactive relationship between the user and the vehicle, and display is performed on an onboard screen according to the plurality of pieces of relational data, so that immediate feedback of an exchange relationship between the user and the vehicle is realized. In one example, memorable stories experienced by a user and a vehicle are displayed on an onboard screen (for example, a central control screen) in the form of milestones, and particularly valuable parts of these milestones are made into badges and displayed to the user.

Other features and advantages of the method and apparatus in the invention will become apparent or can be set forth more specifically by means of accompanying drawings herein and the following detailed description of embodiments for explaining some principles of the invention together with the accompanying drawings.

### Brief Description of the Drawings

FIG. 1 is a schematic diagram of a display control method for an onboard screen according to one embodiment of the invention;
FIG. 2 is a schematic structural diagram of a display control device for an onboard screen according to one embodiment of the invention; and
FIG. 3 is a schematic diagram showing an effect of displaying a plurality of visualized patterns in the form of a time table according to one embodiment of the invention.

### Detailed Description of Embodiments

The following description describes specific implementations of the invention to teach those skilled in the art the best mode about how to make and use the invention. In order to teach the principles of the invention, some conventional aspects have been simplified or omitted. It should be understood by those skilled in the art that variants derived from these implementations will fall within the scope of the invention. It should be understood by those skilled in the art that the following features can be combined in various ways to form a plurality of variants of the invention. Therefore, the invention is not limited to the specific implementation described below, but only defined by the claims and their equivalents.

In this specification, the terms such as "contain" and "comprise" indicate that in addition to units and steps that are directly and clearly described in the specification and claims, other units and steps that are not directly or clearly described are not excluded in the technical solutions of the invention.

The terms such as "first" and "second" are not used to indicate sequences of units in terms of time, space, size, etc., and are only used to distinguish between the units.

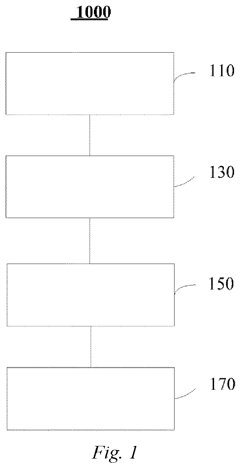

FIG. 1 is a schematic diagram of a display control method for an onboard screen according to one embodiment of the invention. A display control method 1000 comprises the steps of:
step 110, receiving driving data of a user;
step 130, classifying the driving data so as to determine a plurality of pieces of relational data reflecting an interactive relationship between the user and the vehicle;
step 150, judging whether first relational data in the plurality of pieces of relational data meets a preset first condition; and
step 170, displaying, on the onboard screen, a first visualized pattern corresponding to the first relational data to the user if the first relational data meets the preset first condition.

In one embodiment, in step 110, the driving data of the user is received from an electronic control component (ECU) through a CAN bus. Alternatively, the driving data of the user can be acquired from a cloud server. In one embodiment, in step 130, the driving data is classified and rearranged so as to obtain the plurality of pieces of relational data reflecting the interactive relationship between the user and the vehicle.

The display control method 1000 can be used to judge at least some of the relational data and determine whether to display. In one embodiment, the display control method 1000 may further comprise: judging whether second relational data in the plurality of pieces of relational data meets a preset second condition; and displaying, on the onboard screen, a second visualized pattern corresponding to the second relational data to the user if the second relational data meets the preset second condition.

After the at least some of the plurality of pieces of relational data are judged, visualized patterns corresponding to relational data meeting preset conditions are displayed on the onboard screen to the user. In one embodiment, the first visualized pattern and the second visualized pattern are simultaneously displayed on the onboard screen to the user in the form of a time table. Certainly, those skilled in the art can understand that a plurality of visualized patterns (not limited to two visualized patterns) can be simultaneously displayed on the onboard screen to the user in the form of a time table, thereby forming a vehicle storyboard to help the user record his good memories about himself/herself and the vehicle. In another embodiment, the first visualized pattern and the second visualized pattern are displayed to the user in sequence according to their priorities, and the priority can be comprehensively judged according to factors such as the importance of relational data to the user and the date of the relational data.

In the context of the invention, relational data is data reflecting the interactive relationship between the user and the vehicle. In one embodiment, the plurality of pieces of relational data comprise a pickup date, a maintenance date, a long-distance trip date, an application use date, a traveling mileage, the number of cities arrived during a long-distance trip, a vehicle owner activity date, a system update date, etc. The interactive relationship between the user and the vehicle can be immediately fed back to the user by comparing the plurality of pieces of relational data with preset conditions. For example, first experience with the vehicle can be displayed on the onboard screen, such as: the pickup date, first maintenance, first long-distance trip, first use of a certain application (such as navigation), and some operations (such as using a voice assistant) in the vehicle for the first time. For another example, accumulated achievements can be displayed on the onboard screen: a total low-carbon traveling mileage reaching a certain value (such as 100 km/1000 km/5000 km, ...), and the total number of cities arrived during a long-distance trip reaching a certain value (5/10, ...). For a further example, other contacts or interactions between the user and the vehicle can be displayed on the onboard screen: vehicle owner activities the user participated in, every major update of a system, etc.

In one embodiment, the display control method 1000 may further comprise: receiving the relational data from a cloud server; and performing display on the onboard screen to the user according to the relational data. For example, the user is one of the top 100 vehicle owners who purchase this type of vehicle, and the relational data does not exist in an electronic control unit (ECU) of the purchased vehicle, but is recorded, for example, at a vendor. Therefore, the relational data of the "top 100 vehicle owners" is received from the cloud server, so that the relational data can be displayed on the onboard screen to the user in a visualized pattern mode. In one embodiment, the relational data can be displayed to the user in the form of a graph (such as a badge and a medal) corresponding to the relational data. In another embodiment, the visualized pattern is text.

When it is determined that the number of the visualized patterns to be displayed exceeds a preset threshold, it can be considered to display only some of the visualized patterns. In one embodiment, the display control method 1000 may further comprise: determining the number N of visualized patterns to be displayed to the user; and selecting some of the N visualized patterns for display if N is greater than a predetermined threshold. A selection criterion can be determined according to the priority of corresponding relational data. In one embodiment, the priority can be comprehensively judged according to factors such as the importance of the relational data to the user and the date of the relational data. By means of partial display, it is possible to avoid the situation that due to too many visualized patterns that needs to be displayed on the onboard screen, dense (crowded) display is caused, or visualized patterns have to be zoomed out, so that the user experience becomes worse.

In addition to the number of visualized patterns, a proximity between a plurality of dates corresponding to visualized patterns can also be considered to determine whether to display some of the plurality of visualized patterns. For example, the vehicle owner picked up the vehicle on January 1, 2017, the vehicle owner used the voice assistant for the first time on January 2, 2017, the vehicle owner had a long-distance trip for the first time on January 3, 2017, the vehicle owner used the navigation application on February 1, 2017, the vehicle owner participated in off-line vehicle owner activities on March 1, 2017, a major update performed on a system on April 1, 2017, etc. In one embodiment, if the onboard screen cannot carry all the information described above, events corresponding to a lower proximity (i.e., a short date interval) can be omitted by determining a proximity between the dates of the plurality of events (the interval between the pickup date and the date of using the voice assistant was only one day, the interval between the pickup date and the long-distance trip date was only two days, the interval between the pickup date and the date of using the navigation application was one month, the interval between the pickup date and the date of participating in the off-line vehicle owner activities was two months, etc.). In this way, the visualized patterns finally presented to the user are more uniform and attractive.

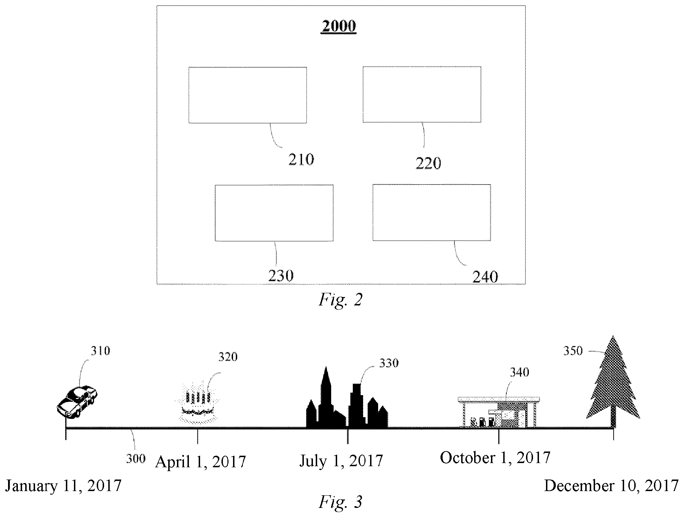

FIG. 2 shows a display control device 2000 for an onboard screen according to one embodiment of the invention. The display control device 2000 comprises: a first receiving unit 210, a classification unit 220, a first judgment unit 230 and a first display unit 240. The first receiving unit 210 is configured to receive driving data of a user. The classification unit 220 is configured to classify the driving data so as to determine a plurality of pieces of relational data reflecting an interactive relationship between the user and the vehicle. The first judgment unit 230 is configured to judge whether first relational data in the plurality of pieces of relational data meets a preset first condition. The first display unit 240 is configured to display, on the onboard screen, a first visualized pattern corresponding to the first relational data to the user if the first relational data meets the first condition.

In one embodiment, the first receiving unit 210 receives the driving data of the user from an electronic control unit (ECU) through a CAN bus. Alternatively, the first receiving unit can acquire the driving data of the user from a cloud server. In one embodiment, the classification unit 220 can classify and rearrange the driving data so as to obtain the plurality of pieces of relational data reflecting the interactive relationship between the user and the vehicle.

The display control device 2000 can be used to judge at least some of the relational data and determine whether to display. In one embodiment, the display control device 2000 may further comprise: a second judgment unit configured to judge whether second relational data in the plurality of pieces of relational data meets a preset second condition; and a second display unit configured to display, on the onboard screen, a second visualized pattern corresponding to the second relational data to the user if the second relational data meets the second condition.

After the at least some of the plurality of pieces of relational data are judged, visualized patterns corresponding to relational data meeting preset conditions are displayed on the onboard screen to the user. In one embodiment, the first display unit and the second display unit are configured to simultaneously display, on the onboard screen, the first visualized pattern and the second visualized pattern to the user in the form of a time table. Certainly, those skilled in the art can understand that a plurality of visualized patterns (not limited to two visualized patterns) can be simultaneously displayed on the onboard screen to the user in the form of a time table, thereby forming a vehicle storyboard to help the user record his good memories about himself/herself and the vehicle. In another embodiment, the first display unit and the second display unit are configured to display the first visualized pattern and the second visualized pattern to the user in sequence according to their priorities, and the priority can be comprehensively judged according to factors such as the importance of relational data to the user and the date of the relational data.

In the context of the invention, relational data is data reflecting the interactive relationship between the user and the vehicle. In one embodiment, the plurality of pieces of relational data comprise a pickup date, a maintenance date, a long-distance trip date, an application use date, a traveling mileage, the number of cities arrived during a long-distance trip, a vehicle owner activity date, a system update date, etc. The interactive relationship between the user and the vehicle can be immediately fed back to the user by comparing the plurality of pieces of relational data with preset conditions. For example, first experience with the vehicle can be displayed on the onboard screen, such as: the pickup date, first maintenance, first long-distance trip, first use of a certain application (such as navigation), and some operations (such as using a voice assistant) in the vehicle for the first time. For another example, accumulated achievements can be displayed on the onboard screen: a total low-carbon traveling mileage reaching a certain value (such as 100 km/1000 km/5000 km, ...), and the total number of cities arrived during a long-distance trip reaching a certain value (5/10, ...). For a further example, other contacts or interactions between the user and the vehicle can be displayed on the onboard screen: vehicle owner activities the user participated in, every major update of a system, etc.

In one embodiment, the display control device 2000 may further comprise: a second receiving unit configured to receive the relational data from a cloud server; and a third display unit configured to perform display on the onboard screen to the user according to the relational data. For example, the user is one of the top 100 vehicle owners who purchase this type of vehicle, and the relational data does not exist in an electronic control unit (ECU) of the purchased vehicle, but is recorded, for example, at a vendor. Therefore, in one embodiment, the second receiving unit is configured to receive the relational data of the "top 100 vehicle owners" from the cloud server, and the third display unit is configured to display the relational data on the onboard screen to the user in a visualized pattern mode. In one embodiment, the third display unit is configured to display the relational data to the user in the form of a graph (such as a badge and a medal) corresponding to the relational data. In another embodiment, the third display unit is configured to display the visualized pattern as text.

When it is determined that the number of the visualized patterns to be displayed exceeds a preset threshold, it can be considered to display only some of the visualized patterns. In one embodiment, the display control device 2000 may further comprise: a first determination unit configured to determine the number N of visualized patterns to be displayed to the user; and a fourth display unit configured to select some of the N visualized patterns for display if N is greater than a predetermined threshold. A selection criterion can be determined according to the priority of corresponding relational data. In one embodiment, the priority can be comprehensively judged according to factors such as the importance of the relational data to the user and the date of the relational data. By means of partial display, it is possible to avoid the situation that due to too many visualized patterns that needs to be displayed on the onboard screen, dense (crowded) display is caused, or visualized patterns have to be zoomed out, so that the user experience becomes worse.

In addition to the number of visualized patterns, a proximity between a plurality of dates corresponding to visualized patterns can also be considered to determine whether to display some of the plurality of visualized patterns. In one embodiment, the display control device 2000 may further comprise: a second determination unit configured to determine a proximity between a plurality of dates corresponding to a plurality of visualized patterns to be displayed to the user; and a fifth display unit configured to display at least some of the plurality of visualized patterns according to the proximity. For example, the vehicle owner picked up the vehicle on January 1, 2017, the vehicle owner used the voice assistant for the first time on January 2, 2017, the vehicle owner had a long-distance trip for the first time on January 3, 2017, the vehicle owner used the navigation application on February 1, 2017, the vehicle owner participated in off-line vehicle owner activities on March 1, 2017, a major update performed on a system on April 1, 2017, etc. In one embodiment, if the onboard screen cannot carry all the information described above, events corresponding to a lower proximity (i.e., a short date interval) can be omitted by determining a proximity between the dates of the plurality of events/interactions (the interval between the pickup date and the date of using the voice assistant was only one day, the interval between the pickup date and the long-distance trip date was only two days, the interval between the pickup date and the date of using the navigation application was one month, the interval between the pickup date and the date of participating in the off-line vehicle owner activities was two months, etc.). In this way, the visualized patterns finally presented to the user are more uniform and attractive.

Those skilled in the art should understand that the foregoing embodiments of the method of the invention can be implemented as a computer program product. Therefore, the invention may, for example, take the form of a computer program product implemented on one or more computer-available storage media (including but not limited to a magnetic disk memory, an optical memory, etc.) containing computer-available program codes therein. In addition, those skilled in the art can also understand that the foregoing display control device of the invention can be combined into existing vehicles to provide better experience for users.

FIG. 3 is a diagram showing an effect of displaying a plurality of visualized patterns in the form of a time table according to one embodiment of the invention. As shown in FIG. 3, there are a plurality of memorial dates on a time line 300. Among them, January 11, 2017 is a pickup date of a user, which is represented by a visualized pattern 310; April 1, 2017 is a vehicle owner activity date, which is represented by a visualized pattern 320; July 1, 2017 is a date at which the vehicle owner made the first long-distance trip, which is represented by a visualized pattern 330; October 1, 2017 is a date at which the vehicle owner had his vehicle maintained for the first time, which is represented by a visualized pattern 340; and December 10, 2017 is a date at which a total low-carbon traveling mileage of the vehicle owner reached 100 km, which is represented by a visualized pattern 350. It is clear to those skilled in the art that various visualized patterns corresponding to relational data can be used for display. In one embodiment, for the first long-distance trip of the vehicle owner, a landmark building of the city where the trip was made can be displayed as a visualized pattern. In another embodiment, the name of the city can be displayed as a visualized pattern. In a further embodiment, a combination of the name and the landmark building (namely a combination of text and a graph) of the city can be displayed as a visualized pattern.

In summary, in the technical solutions of the invention, driving data of a user is received and converted into a plurality of pieces of relational data reflecting an interactive relationship between the user and the vehicle, and display is performed on an onboard screen according to the plurality of pieces of relational data, so that immediate feedback of an exchange relationship between the user and the vehicle is realized, and the user experiences the pleasure of owning a vehicle.

The foregoing examples mainly illustrate the display control method and device for an onboard screen, the automobile and the computer storage medium of the invention. Although only one or more embodiments of the invention are described, those skilled in the art should understand that the invention may be implemented in many other forms without departing from the essence and scope thereof. Therefore, the presented examples and implementations are considered to be illustrative rather than restrictive, and the invention may encompass various modifications and replacements without departing from the spirit and scope of the invention that are defined by the appended claims.

## Claims

1. A display control method for an onboard screen, the method comprising:
receiving driving data of a user;
classifying the driving data so as to determine a plurality of pieces of relational data reflecting an interactive relationship between the user and the vehicle;
judging whether first relational data in the plurality of pieces of relational data meets a preset first condition; and
displaying, on the onboard screen, a first visualized pattern corresponding to the first relational data to the user if the first relational data meets the preset first condition.

2. The display control method of claim 1, further comprising:
judging whether second relational data in the plurality of pieces of relational data meets a preset second condition; and
displaying, on the onboard screen, a second visualized pattern corresponding to the second relational data to the user if the second relational data meets the preset second condition.

3. The display control method of claim 2, wherein the first visualized pattern and the second visualized pattern are simultaneously displayed on the onboard screen to the user in the form of a time table.

4. The display control method of claim 1, wherein the plurality of pieces of relational data comprise any one of the following: a pickup date, a maintenance date, a long-distance trip date, an application use date, a traveling mileage, the number of cities arrived during a long-distance trip, a vehicle owner activity date and a system update date.

5. The display control method of any one of claims 1 to 3, further comprising:
receiving the relational data from a cloud server; and
performing display on the onboard screen to the user according to the relational data.

6. The display control method of claim 2, further comprising:
determining the number N of visualized patterns to be displayed to the user; and
selecting some of the N visualized patterns for display if N is greater than a predetermined threshold.

7. The display control method of claim 3, further comprising:
determining a proximity between a plurality of dates corresponding to a plurality of visualized patterns to be displayed to the user; and
displaying at least some of the plurality of visualized patterns according to the proximity.

8. The display control method of claim 1, wherein the visualized pattern is a graph or text.

9. The display control method of claim 1, wherein the driving data is received from an electronic control component (ECU) of the vehicle or acquired from a cloud server.

10. A display control device for an onboard screen, the device comprising:
a first receiving unit configured to receive driving data of a user;
a classification unit configured to classify the driving data so as to determine a plurality of pieces of relational data reflecting an interactive relationship between the user and the vehicle;
a first judgment unit configured to judge whether first relational data in the plurality of pieces of relational data meets a preset first condition; and
a first display unit configured to display, on the onboard screen, a first visualized pattern corresponding to the first relational data to the user if the first relational data meets the first condition.

11. The display control device of claim 10, further comprising:
a second judgment unit configured to judge whether second relational data in the plurality of pieces of relational data meets a preset second condition; and
a second display unit configured to display, on the onboard screen, a second visualized pattern corresponding to the second relational data to the user if the second relational data meets the second condition.

12. The display control device of claim 11, wherein the first display unit and the second display unit are configured to simultaneously display, on the onboard screen, the first visualized pattern and the second visualized pattern to the user in the form of a time table.

13. The display control device of claim 10, wherein the plurality of pieces of relational data comprise any one of the following: a pickup date, a maintenance date, a long-distance trip date, an application use date, a traveling mileage, the number of cities arrived during a long-distance trip, a vehicle owner activity date and a system update date.

14. The display control device of any one of claims 10 to 12, further comprising:
a second receiving unit configured to receive the relational data from a cloud server; and
a third display unit configured to perform display on the onboard screen to the user according to the relational data.

15. The display control device of claim 11, further comprising:
a first determination unit configured to determine the number N of visualized patterns to be displayed to the user; and
a fourth display unit configured to select some of the N visualized patterns for display if N is greater than a predetermined threshold.

16. The display control device of claim 12, further comprising:
a second determination unit configured to determine a proximity between a plurality of dates corresponding to a plurality of visualized patterns to be displayed to the user; and
a fifth display unit configured to display at least some of the plurality of visualized patterns according to the proximity.

17. The display control device of claim 10, wherein the visualized pattern is text or a graph.

18. The display control device of claim 10, wherein the first receiving unit is configured to receive the driving data of the user from an electronic control component (ECU) of the vehicle or acquire the driving data from a cloud server.

19. An automobile, comprising the display control device of any one of claims 10 to 18.

20. A computer storage medium, comprising an instruction, wherein when the instruction is executed, the display control method of any one of claims 1 to 9 is carried out.
